# EUROPÄISCHE PATENTSCHRIFT

(11) **EP 1 312 467 B1**
(45) Veröffentlichungstag und Bekanntmachung des Hinweises auf die Patenterteilung: **05.01.2005**
(21) Anmeldenummer: 02024865.4
(22) Anmeldetag: 08.11.2002
(51) Int. Cl.: B32B 15/01

(54) **Metallfaserverstärkter Verbundwerkstoff sowie Verfahren zur Herstellung desselben**
Metal fibre reinforced composite material and method of making
Matériau composite renforcé par des fibres métalliques et procédé de fabrication

(30) Priorität: 16.11.2001 DE 10156125
(43) Veröffentlichungstag der Anmeldung: 21.05.2003
(73) Patentinhaber: EADS Deutschland GmbH, 85521 Ottobrunn (DE)
(72) Erfinder: Palm, Frank, 81737 München (DE)

(56) Entgegenhaltungen:
- DE-A- 3 622 781
- US-A- 3 764 277
- US-A- 4 753 850
- PATENT ABSTRACTS OF JAPAN vol. 2000, no. 12, 3. Januar 2001 (2001-01-03) & JP 2000 263697 A (MITSUBISHI HEAVY IND LTD), 26. September 2000 (2000-09-26)

## Beschreibung

Die vorliegende Erfindung betrifft einen metallfaserverstärkten Verbundwerkstoff sowie ein Verfahren zur Herstellung desselben gemäß Patentanspruch 1 bzw. 8.

Eine Vielzahl von Metall-Matrix-Verbundwerkstoffen ist bekannt, die in der Regel Verstär-kungselemente in Form von pulverförmigen Partikeln, Kurz- oder Langfasern enthalten. Zum Teil sind diese Elemente direkt in die Metall-Matrix eingebettet oder mit dieser zu einem Schichtwerkstoff verklebt.

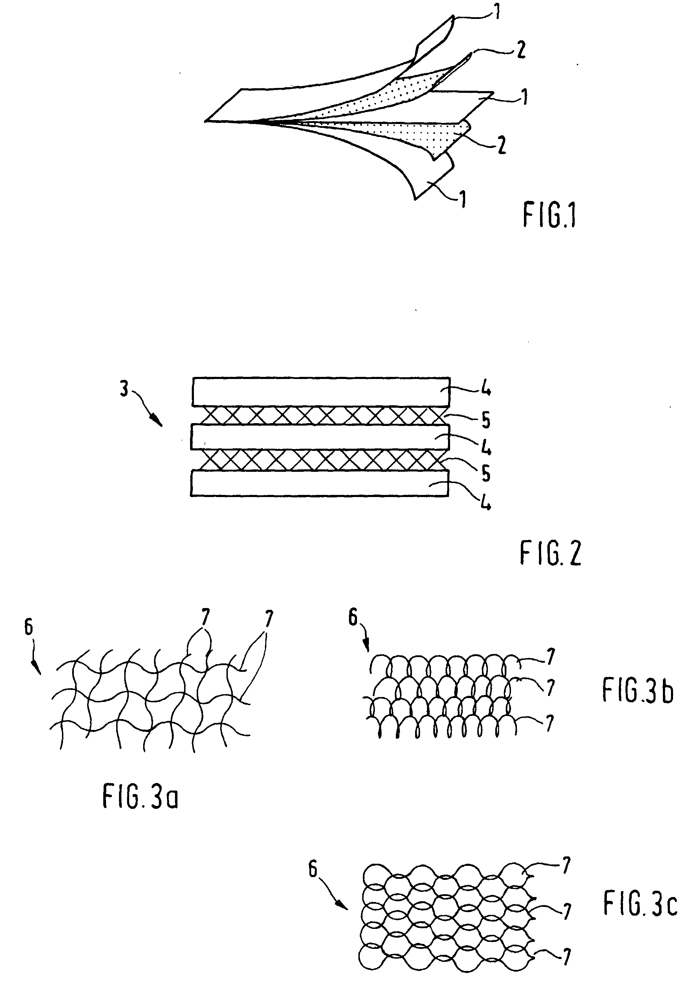

In der Luftfahrt wird ferner ein weiterer Verbundwerkstoff, der auch als "fibre metal laminate" (FML) bezeichnet wird, verwendet, dessen Aufbau beispielsweise in dem Artikel von J.W. Gunnink "GLARE: An Improved Damage Tolerance Material", Proceedings of 19^{th} European Conference on Materials for Aerospace Applications, München, Deutschland, 6. - 8. Dezember 2000, beschrieben ist. Der Glare-Werkstoff ist ein Schichtmaterial und besteht aus einer Anzahl abwechselnd angeordneter Schichten aus Aluminium und Glasfaser-Pre-pregs ( Fig. 1). Dabei bezeichnet der Begriff "Prepreg" bekanntlich vorimprägniertes Fasergelege. Bei dem hier verwendeten Prepreg-Material sind die Glasfasern in zwei zueinander senkrecht verlaufenden Richtungen ausgerichtet, wobei die Faserrichtungen üblicherweise mit 0° und 90° bezeichnet sind. Die Anzahl der Fasern in 0°-Richtung bzw. in 90°-Richtung kann dabei identisch oder unterschiedlich sein.

Die Gesamtdicke des Glare-Werkstoffes hängt insbesondere von den strukturellen Anforderungen ab. Während die Aluminiumschichten eine Dicke von typischerweise 0,2 - 0,5 mm und die Prepreg-Schichten eine Dicke von ca. 0,125 mm aufweisen, beträgt die minimale Dicke des Glare-Werkstoffes beispielsweise 0,525 mm. Für praktische Anwendungen wird jedoch eine Dicke von 0,85 mm bevorzugt.

Daneben wurden bereits Glare-Werkstoffe mit einer Dicke von bis zu 40 mm hergestellt. Der Schichtverbund ist mit einem Kleber, typischerweise einem duromeren Epoxyharz, laminiert.

Der Vorteil des Glare-Werkstoffes liegt insbesondere in seinem Gewichtseinsparungspotential, so dass er hauptsächlich in der Luftfahrttechnik z.B. als Haut- bzw. Rumpfmaterial Anwendung findet. Daneben weist der Werkstoff eine hohe Schadenstoleranz auf. Insbesondere bietet er einen verbesserten Widerstand gegen Rissbildung, Risswachstum und Risszähigkeit (Aufreißwiderstand) im Vergleich zu Al-Luftfahrtwerkstoffen für die Druckrumpfbeplankung. Dadurch wird die Einsatzlebensdauer verbessert sowie bei entsprechender Dimensionierung das Gewicht reduziert.

Nachteilig ist jedoch, dass der Glare-Werkstoff aufgrund seines Schichtaufbaus aus unterschiedlichen Materialarten nur eine geringe Scherfestigkeit aufweist, so dass die Gefahr einer Delamination groß ist. Dies wird ferner durch den zum Verbinden des Schichtaufbaus verwendeten Klebers verstärkt, der nur eine gewisse Grenzfestigkeit aufweist. Folglich ist bei Scher- oder Schubkräften die Belastbarkeit des Materials begrenzt. Dies führt beispielsweise dazu, dass Lochleibungen nicht stabil sind. Das heisst, Löcher, die in dem Werkstoff vorgesehen sind, fransen oder dehnen sich unter Belastung aus, so dass die Form der Löcher in ungewünschter Weise verändert wird. Daneben ist der Glare-Werkstoff aufgrund des beschriebenen Schichtaufbaus feuchtigkeitsempfindlich und die Verwendung von unterschiedlichen Materialarten macht den Verbundwerkstoff schlecht recycelbar.

Ein weiterer Nachteil ist, dass die Steifigkeit des Werkstoffes in bestimmten Richtungen aufgrund der speziellen Faserorientierung begrenzt ist. Zudem grenzt die erhebliche Anisotropie der Festigkeitseigenschaften den Designspielraum ("Tailoring") ungewollt stark ein.

Desweiteren ist es von Nachteil, dass die klassische Weiterverarbeitung des Werkstoffes zu einem Halbzeug, z.B. mittels Umformen, Bohren, Wärmebehandeln, Spannen, Schweißen, Schmieden etc. extrem eingeschränkt ist, da die in dem Prepreg-Material verwendeten keramischen Fasern (z.B.Glas-, C-, Bor- oder SiC- Fasern) für Integralbauweisen der Zukunft hierzu nicht geeignet sind. Daneben ist der Glare-Werkstoff nicht schweißtechnisch verarbar; das gilt sowohl für T-Stöße (z.B. Haut-Stringer-Verbindung) als auch für Stumpfstöße.

US 4,753,850 offenbart einen metallfaserverstärkten Verbundwerkstoff aus alternierenden Lagen aus einem Leichtmetall, das mit einer gewalzten Lotplattierung versehen ist und Lagen aus hochtemperaturbeständigen Fasermatten aus weitgehen parallel ausgerichteten Fasern. Der Verbundwerkstoff läßt sich jedoch nur bis maximal 15i. strecken.

Der vorliegenden Erfindung liegt somit die Aufgabe zugrunde, einen Verbundwerkstoff zu schaffen, der die oben genannten Nachteile nicht aufweist und zumindest ähnliche oder verbesserte Festigkeitseigenschaften wie bekannte Verbundwerkstoffe aufweist, einfach und kostengünstig herstellbar, und darüber hinaus gut recyclebar ist.

Die Aufgabe wird durch einen metallfaserverstärkten Verbundwerkstoff bestehend aus miteinander verbundenen, alternierend angeordneten Metallschichten und Verstärkungsschichten gelöst, der sich erfindungsgemäß dadurch auszeichnet, dass die Verstärkungsschichten Fasern aus hochfestem, metallischem Material enthalten, die in Form eines losen Gewirks zwischen den Metallschichten angeordnet sind, um einen Materialüberschuss an Fasern in den Verstärkungsschichten zu schaffen, so dass die Fasern in dem durch einen thermo-mechanischen Prozess verschweißten Verbundwerkstoff aufgrund des Materialüberschusses gelängt sind.

Durch das Einbringen von hochfesten, metallischen Fasern mit einem ausreichenden Faservorrat wird eine Verstärkung in den Verbundwerkstoff direkt eingebracht. Dabei gewährleisten die metallisch inerten Fasern eine Kompatibilität zu den üblichen Herstellungs- bzw. Bearbeitungsprozeduren derartiger Verbundwerkstoffe (z.B. Walzen Strangpressen, Umformen, Spannen, Schmieden oder Schweißen), so dass ein derartiger Verbundwerkstoff erheblich einfacher und kostengünstiger als bekannte Verbundwerkstoff herstellbar ist. Aufgrund der Kompatibilität der Fasern zeichnet sich der Verbundwerkstoff ferner durch geringere strukturelle Defizite hinsichtlich E-Modul oder Delamination auf. Darüber hinaus ist die Recyclebarkeit aufgrund der Kompatibilität der Fasern gewährleistet.

Die Metallschichten bestehen zweckmäßigerweise aus einer Leichtmetalllegierung. Diese hat den Vorteil, dass der erfindungsgemäße Verbundwerkstoff ein hohes Gewichtseinsparungspotiential aufweist und somit sehr gut für Leichtbauanwendungen geeignet ist.

Zweckmäßigerweise bestehen die Fasern aus einem austenitischen oder ausscheidungshärtenden Edelstahl oder einer Nickelbasislegierung. Ebenso kann eine Metalllegierung verwendet werden, welche höher fest als der Verbundwerkstoff ist und durch eine thermo-mechanische Weiterbearbeitung bei Temperaturen bis max. 600 ° C nicht nachhaltig geschädigt werden. Die Fasern können z.B. Ti-, TiAl-, FeAl-, NiAl oder Co-Drähte sein. Die genannten Materialien haben den Vorteil, dass sie ein sehr gutes Festigkeits-Zähigkeitsver-hältnis aufweisen, so dass Halbzeuge, die aus dem erfindungsgemäßen Verbundwerkstoff hergestellt sind, eine hohe Festigkeit aufweisen. Daneben weisen insbesondere die Edelstähle eines neutrales Korrosionsverhalten in Verbindung mit Aluminium oder Magnesium auf.

Vorteilhafterweise ist das lose Gewirk eine aus den Fasern geflochtene, gewobene oder gestrickte Struktur. Auf diese Weise kann mit relativ einfachen Mitteln gewährleistet werden, dass innerhalb der Verstärkungsschichten ein ausreichender Materialüberschuss an Fasern vorhanden ist, so dass sich das lose Gewirk beim Verschweißen des Verbundwerkstoffes mittels Walzens aufgrund des Materialüberschusses an Fasern und nicht aufgrund deren eigener Dehnbarkeit längen.

Gemäß einer weiteren Ausführungsform ist das lose Gewirk eine aus den Fasern hergestellte netzartige, verworrene oder versponnene Struktur. Diese Ausführungsform hat den Vorteil, dass sie besonders einfach herstellbar ist.

Die Aufgabe der Erfindung wird ferner durch ein Verfahren zur Herstellung eines metallfaserverstärkten Verbundwerkstoffes gelöst, das sich erfindungsgemäß dadurch ausgezeichnet, dass Metallschichten und Verstärkungsschichten zu einer Schichtstruktur alternierend angeordnet werden, wobei die Verstärkungsschichten Fasern aus hochfestem, metallischem Material enthalten, die in Form eines losen Gewirks zwischen die Metallschichten eingelegt werden, um einen Materialüberschuss an Fasern in den Verstärkungsschichten zu schaffen; und dass die Schichtstruktur durch einen thermo-mechanischen Prozess verbunden wird, wobei sich die Fasern aufgrund des Materialüberschusses längen und die Schichtstruktur so verschweißt wird.

Dieses Verfahren zeichnet sich insbesondere durch seine einfache Prozesstechnik aus, so dass derartige metallfaserverstärkte Verbundwerkstoffe einfach und kostengünstig herstellbar sind. Ferner ist es von Vorteil, dass die Metallfasern kompatibel zu typischen Herstell- bzw. Bearbeitungsprozeduren sind, so dass eine einfache Weiterbearbeitung des erfindungsgemäßen Verbundwerkstoffes zu Profilen, Blechen, Halbzeugen etc. möglich ist. Vorteilhafterweise ist aufgrund der eingelagerten hochfesten, metallischen Fasern die Festigkeit, das Ermüdungs-, aber auch das Riss-, Fortschritts- und Kriechverhalten von derartigen Profilen, Blechen, Halbzeugen etc. erheblich gesteigert.

Vorzugsweise ist der thermo-mechanische Prozess ein Warm- oder Kaltwalzen. Folglich ist das Verfahren flexibel, da das Verbinden der Schichtstruktur nicht auf einen bestimmten Prozess beschränkt ist.

Ferner ist es zweckmäßig, dass die Metallschichten vor dem Verbinden der Schichtstruktur mittels Walzen mit einer Lotlegierung versehen werden, wobei die Lotlegierung vorzugsweise eine AlSi12-Legierung ist. Daneben sind auch andere walzplatierbare Al-Lotlegierungen verwendbar. Durch eine derartige Lotlegierung wird das meist schlechte Diffusions- bzw. Warmpressschweißverhalten der Metallschichten aufgrund sehr beständiger Aluminiumoxyd (Al₂O₃)- Deckschichten, die sich auf der Oberfläche der Metallschichten bilden, überwunden.

Besonders vorteilhaft ist es, wenn die Metallschichten vor der eigentlichen Bearbeitung bzw. vor dem Anordnen zu einer Schichtstruktur walzplattiert werden. Dies ist eine einfache und effektive Vorgehensweise, die Metallschichen mit der Lotlegierung zu versehen. Ferner weist sich die Verwendung von Metallschichten, die mit einer Lotlegierung versehen sind, insbesondere dann vorteilhaft auf, wenn die Schichtstruktur vor dem Walzen auf eine Temperatur unterhalb von ca. 600°C aufgeheizt wird, so dass die Lotlegierung schmilzt und zu einem Verbacken der Schichtstruktur führt. Auf diese Weise wird gleichzeitig eine Stabilisierung der Schichtstruktur vor dem eigentlichen Verbinden mittels Walzen erreicht, so dass ein Verschieben bzw. Verrutschen der Schichten während des Walzens wirkungsvoll vermieden wird und auf zusätzliche Haltevorrichtung verzichtet werden kann.

Gemäß einer weiteren vorteilhaften Ausführungsform werden die Fasern mit Zink, Nickel oder Kupfer oder einer anderen benetzungsfördernden Oberflächenschicht oberflächenbehandelt. Auf diese Weise kann die Legierungsbildung beim Verbinden der Schichtstruktur zusätzlich auf einfache Weise gesteuert werden.

Der erfindungsgemäße Verbundwerkstoff wird zweckmäßigerweise zu Halbzeugen jeglicher Art weiterverarbeitet. Dabei findet er hauptsächlich in der Flugzeugtechnik Anwendung, beispielsweise für Rumpfbeplankungen und Hautfelder. Daneben kann er für andere fahrzeugtechnische Anwendungen in der Wehrtechnik sowie zur Herstellung von Transportbehältern verwendet werden.

Im folgenden wird die Erfindung anhand der beigefügten Abbildungen in näheren Einzelheiten erläutert. In denen zeigt:
- Fig. 1: in schematischer Darstellung die Struktur eines typischen Verbundwerkstoffes für Luftfahrtanwendungen gemäß dem Stand der Technik;
- Fig.2: den Prinzipaufbau eines metallfaserverstärkten Verbundwerkstoffes gemäß der vorliegenden Erfindung;
- Fig. 3a - c: dreidimensionale schematische Darstellungen des zwischen den Metallschichten angeordneten losen Gewirks;
- Fig. 4a - c: Schnittansichten der Verstärkungsschicht zur Erläuterung der Gestalt des losen Gewirks und dessen Materialüberschuss an Fasern;
- Fig. 5a - c: Schnittansichten des erfindungsgemäßen metallfaserverstärkten Verbundwerkstoffes zur Erläuterung dessen Herstellung; und
- Fig. 6: ein Bauteil, das aus dem erfindungsgemäßen metallfaserverstärkten Verbundwerkstoff hergestellt ist.

Wie eingangs bereits erläutert, zeigt Fig. 1 den schematischen Aufbau des Verbundwerkstoffes "Glare", der hauptsächlich in der Luftfahrt Anwendung findet. Dieser Verbundwerkstoff besteht aus einer Vielzahl von alternierend angeordneten Aluminium- und Prepreg-Schichten 1 bzw. 2, die mittels eines duromeren Harzes zu einem Schichtverbund laminiert sind.

Fig. 2 zeigt in schematischer Darstellung den Aufbau des erfindungsgemäßen metallfaserverstärkten Verbundwerkstoffes. Der Verbundwerkstoff 3 besteht aus einer Vielzahl von Metallschichten 4 sowie einer Vielzahl von Verstärkungsschichten 5, die alternierend zu einem Stapel angeordnet sind. Die Anzahl der Schichten ist an die jeweiligen Anforderungen anpassbar. In Fig. 2 sind aus Gründen der besseren Übersicht lediglich drei Metallschichten 4 und zwei Verstärkungsschichten 5 dargestellt. Ferner sind in Fig. 2 die Verstärkungsschichten 5 schematisch durch "X" angedeutet, um die Art der Verstärkungsschichten von der der Metallschichten zu unterscheiden.

Die Metallschichten 4 sind typischerweise Bleche aus Leichtmetalllegierungen. Bevorzugt werden mittel- bis hochfeste Aluminiumlegierungen verwendet. Es können aber auch Magnesiumbleche oder andere für die Luftfahrt geeignete Materialien in Blechform verwendet werden. Somit ist der erfindungsgemäße Verbundwerkstoff insbesondere für Leichtbauanwendungen geeignet. Dabei können die Metallschichten z.B. hinsichtlich ihrer Korrosionsbeständigkeit an gewünschte Parameter angepasst sein.

Im Gegensatz zum eingangs beschriebenen Stand der Technik enthalten die Verstärkungsschichten 5 Fasern 7 aus hochfestem, metallischem Material. Die Metallfasern bringen die notwendigen Eigenschaften mit sich, welche zur Herstellung des Verbundwerkstoffes und seinen fertigungstechnischen Folgeprozessen erforderlich sind. Die Metallfasern bestehen typischerweise aus Edelstahl (z.B. 1.4548, 1.4541 oder 1.4546) und sind drahtförmig ausgebildet. Bevorzugt werden austenitische oder ausscheidungshärtende Edelstahlwerkstoffe aufgrund deren neutralen Korrosionsverhaltens sowie deren guten Festigkeits-Zähigkeits-verhältnisses verwendet. Insbesondere ist der zweite Werkstofftyp durch sein Verfestigungsverhalten (eine Auscheidungshärtung im Temperaturbereich von 480 - 580 ° C) gut kompatibel zu klassischen lösungsglüh- und anderen für Aluminiumlegierungen typischen thermo-mechanischen Prozesse. Daneben können auch Nickelbasislegierungen oder Ti-, TiAl-, FeAl-, NiAl- oder Co-Drähte verwendet werden. Die aus den genannten Materialien hergestellten Fasern weisen vorzugsweise eine drahtförmige Gestalt auf und haben einen Durchmesser von ca. 0,001 mm - 1 mm. Besonders bevorzugt wird ein Drahtdurchmesser von 0,1 ± 0,01 mm verwendet. Dabei sind die drahtförmigen Fasern zu einem losen Gewirk ausgebildet, was im folgenden im Zusammenhang mit Fig . 3 und 4 in näheren Einzelheiten beschrieben wird.

Fig. 3 zeigt in schematischer Darstellung unterschiedliche Ausführungsformen des losen Gewirks, das in Fig. 3 mit Bezugszeichen 6 bezeichnet ist. Fig. 3a zeigt ein loses Gewirk , das aus gewobenen Fasern 7 gebildet ist. Daneben kann das lose Gewirk auch eine aus den Fasern 7 gestrickte oder geflochtene Struktur sein, wie das schematisch in Fig. 3b bzw. Fig. 3c angedeutet ist. Für das gestrickte Fasergewirk kann eine handelsübliche Strickmaschine verwendet werden. Wie aus Fig. 3a - c zu sehen ist, hat das lose Gewirk in der Regel eine dreidimensionale Gestalt. Dabei ist die Faserorientierung prizipiell beliebig einstellbar, so dass auf einfache Weise eine multidirektionale Wirkung der Fasern erzielt werden kann. Dies hat den Vorteil einer gleichmäßigen Belastbarkeit in alle Raumrichtungen. Wesentlich ist ferner, dass die hochfesten, metallischen Fasern 7 nicht in gestreckter Form zwischen den Metallschichten 4 angeordnet sind, sondern dass ein ausreichender Materialüberschuss an Fasern in den Verstärkungsschichten 5 vorhanden ist, was durch den Begriff "loses" Gewirk zum Ausdruck kommen soll. Ein derartiger Materialüberschuss an Fasern ist für die Funktionstüchtigkeit des erfindungsgemäßen metallfaserverstärkten Verbundwerkstoffes wichtig. Wäre ein derartiger Überschuss an Fasern nicht vorhanden, könnte es beim Verbinden der in Fig. 2 dargestellten Schichtstruktur 3 mittels Walzen zu einem Reißen der Fasern 7 kommen, so dass deren Verstärkungsfunktion deutlich vermindert wäre. Selbstverständlich kann das lose Gewirk auch durch ein einfaches netzartiges Anordnen, ein Verwirren oder Verspinnen der Fasern hergestellt werden.

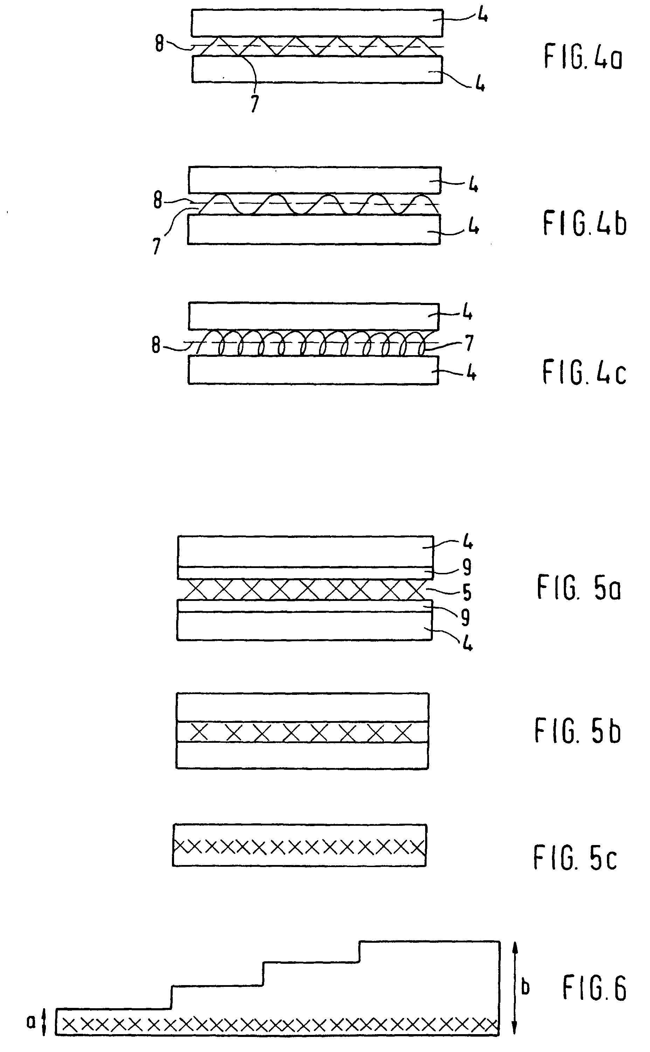

Zur weiteren Erläuterung der Gestalt des losen Gewirks und dessen Materialüberschuss an Fasern, zeigen die Abbildungen von Fig. 4 jeweils eine Schnittansicht einer Verstärkungsschicht 5. Wie bereits erwähnt, sind die Fasern 7 des innerhalb der Verstärkungsschicht 5 angeordneten losen Gewirks 6 nicht gerade bzw. ausgestreckt zwischen den Metallschichten 4 angeordnet, was in Fig. 4a - 4c jeweils zu Vergleichszwecken durch eine gestrichelte Linie 8 dargestellt ist, sondern beispielsweise zick-zack- (Fig. 4a), wellen- (Fig. 4b) oder spiralförmig (Fig. 4c) angeordnet. Dies hat zur Folge, das die Gesamtlänge jeder einzelnen Faser 7 im Vergleich zur gestreckten Anordnung wesentlich Länger ist, so dass mehr Fasermaterial innerhalb jeder einzelnen Verstärkungsschicht vorhanden ist. Auf diese Weise wird der Materialüberschuss an Fasern zuverlässig gewährleistet. Selbstverständlich dienen die im Zusammenhang mit Fig. 3a - 3c bzw. Fig. 4a - 4c beschriebenen Anordnungen lediglich der beispielhaften Erläuterung des Erfindungsgedankens und stellen keine Einschränkung dar.

Der in Fig. 2 dargestellte Schichtaufbau 3 mit dem oben geschilderten Materialüberschuss innerhalb der Verstärkungsschichten 5 wird durch einen thermomechanischen Prozess (z.B. einen Walzvorgang) zu dem erfindungsgemäßen metallfaserverstärkten Verbundwerkstoff verbunden. Die Dickenreduktion während des Walzens führt zu einer Verlängerung des Walzgutes, d.h. zu einer Verlängerung der Metall- als auch der Verstärkungsschichten. Eine Dickenreduktion von 50 % führt dabei typischerweise zu einer Verlängerung von 200 %, so dass die Fläche in Fügeebene, d.h. in Schichtebene, verdoppelt wird. Dabei werden innerhalb der Verstärkungsschichten 5 die Fasern 7 des losen Gewirks 6 weitgehend aufgrund ihres Materialüberschusses gestreckt und nicht aufgrund ihrer eigenen Dehnbarkeit. Ferner wird beim Walzen der Grundwerkstoff, d.h. der Werkstoff der Metallschichten, der das Fasergewirk idealerweise rundum umschließt, durchgeknetet, um anschließend zu rekristallisieren, wobei das Fasergewirk zur Verstärkung in dem Verbundwerkstoff komplett eingekapselt ist. Aufgrund der verwendeten metallurgisch inerten Fasern, die kompatibel zu den Herstellungsprozeduren von Leichtmetallwerkstoffen sind, z.B. Walzen, Schmieden, Strangpressen, Umformen, Spannen, Schweißen etc. - d.h., die Fasern degradieren nicht im Temperaturbereich bis maximal 650°C - können die Fasern direkt in den Verbund eingebracht werden, um dadurch den Grundwerkstoff wirksam zu verstärken. Ein aus einem derartigen Verbundwerkstoff hergestelltes Halbzeug besitzt somit alle positiven Eigenschaften des Grundwerkstoffes, verbunden mit den besonderen, positiven Fähigkeiten, die dem Verbundwerkstoff durch die Einlagerung der hochfesten (1000 - 2500 MPa oder mehr), aber erheblich duktilen Metallfasern (im Vergleich zu keramischen Faser) verleiht.

Ferner ist anzumerken, dass der Walzvorgang sowohl mittels Kaltwalzens als auch mittels Warmwalzens durchgeführt werden kann, so dass der Herstellungsprozess nicht auf einen bestimmten Prozess beschränkt ist. Darüber hinaus kann dieser Bearbeitungsschritt z.B. auf einfache Weise in einen Strangpressprozess integriert werden, was die Herstellung von Profilen und Halbzeugen aus einem derartigen metallfaserverstärkten Verbundwerkstoff wiederum vereinfacht.

Im folgenden wird anhand der Fig. 5a - 5c das Herstellverfahren für den metallfaserverstärkten Verbundwerkstoff im einzelnen diskutiert. Hierbei wird eine alternative Ausführungsform beschrieben, die insbesondere ein Verbinden der in Fig. 2 dargestellten Schichtstruktur verbessert, wobei das Verbinden wieder mit Grundwerkstofffestigkeit erfolgt.

Gemäß dieser alternativen Ausführungsform werden die Metallschichten vor dem Walzvorgang zusätzlich mit einer Lotlegierung beschichtet. Diese Lotlegierung dient dazu, die Pro-bleme aufgrund der sich auf den Metallschichten bildenden beständigen Al₂O₃-Deckschich-ten zu überwinden. Diese Lotlegierung ist in Fig. 5a mit Bezugsziffer 9 bezeichnet und ist typischerweise eine AlSi12-Legierung, die z.B. durch Walzplattieren auf die Oberfläche der Metallschichten aufgetragen wird. Es können aber auch andere walzplatierbare Al-Legierun-gen verwendet werden. Zur Bildung des metallfaserverstärkten Verbundwerkstoffes werden wiederum mehrere, alternierend angeordnete Metallschichten 4 und Verstärkungsschichten 5 analog zu der in Fig. 2 gezeigten Schichtstruktur gestapelt (siehe Fig. 5a). Hierbei können die Fasern des losen Gewirks zusätzlich mit Zink, Nickel oder Kupfer oberflächlich metallurgisch aktiviert sein, um die Legierungsbildung bzw. das Verschweißen des Schichtaufbaus weiter zu verbessern.

Als nächstes wird der in Fig. 5a gezeigte Schichtaufbau erwärmt. Diese Erwärmung kann beispielsweise in einem separaten Arbeitsschritt in einem Ofen - vorzugsweise unter Vakuum oder Schutzgas - erfolgen. Das Erwärmen des Schichtverbundes führt zum vollständigen oder teilweise Schmelzen der Lotlegierung 9, deren Schmelztemperatur bei ca. 580 °C liegt. Die geschmolzene Lotlegierung umschließt die drahtförmigen Fasern und infiltriert sie. Dies hat zur Folge, dass die mit dem störenden Aluminiumoxyd (Al₂O₃) belegten Oberflächen der Metalischichten 4 sich auflösen, so dass die nachteilige Wirkung der Al₂O₃-Deckschichten deutlich reduziert wird. Gleichzeitig führt das Schmelzen der Lotlegierung dazu, dass die Schichtstruktur an den Grenzflächen von Metall- und Verstärkungsschichten zu einem gewissen Grad verklebt, so dass der Schichtverbund quasi verbacken wird. Dadurch wird ein Verschieben bzw. gegenseitiges Verrutschen der Schichten während des Walzvorganges wirksam vermieden, ohne dass aufwendige Haltevorrichtungen erforderlich sind. Ferner wird durch das Verbacken eine Blasenbildung durch Lufteinschlüsse nach einem ggf. durch-geführten Lösungsglühen verhindert. Der verbackene Schichtverbund ist in Fig. 5b schematisch angedeutet.

Anschließend wird die in Fig. 5b dargestellte Schichtstruktur, wie bereits voranstehend erläutert, durch einen Warm- oder Kaltwalzvorgang diffusions- bzw. warmpressverschweißt. Dabei wird der Grundwerkstoff verknetet, der anschließend rekristallisiert und dabei in idealer Weise das Fasergewirk zu Verstärkungszwecken einschließt (Fig. 5c). Beim Walzwalzen, das typischerweise bei Temperaturen zwischen 350 °C und 500 ° C durchgeführt wird, kann es kurzfristig zu einer "flüssigen Phase" der Lotlegierung führen, und zwar dann, wenn die Temperatur über den Schmelzpunkt der Lotlegierung (d.h. T> 580 °C) ansteigt. Die flüssige Phase dauert meist nur kurz an, da sich die Lotlegierung in der Regel schnell wieder verfestigt.

Nach dem Walzen wird der Verbundwerkstoff abhängend von dem verwendeten Grundmaterial weiterbearbeitet. Bestehen die Metallschichten aus einer nichtaushärtenden Aluminium-Legierung, wird der Verbund z.B. durch Kaltwalzen gerichtet und anschließend besäumt und abgekühlt. Wird z.B. eine aushärtende Aluminiumlegierung verwendet, können folgende Bearbeitungsschritte folgen: Kaltwalzen, Lösungsglühen, Abschrecken, Richten und/oder Warmauslagern.

### BEISPIEL:

Ein typisches Aluminium-Luftfahrt-Legierungsblech ist aus drei Blechlagen 4 sowie zwei Verstärkungsschichten 5 aufgebaut ist. Dabei haben die Blechlagen vor dem Walzen eine Dicke von 4 mm und die Verstärkungsschichten haben eine Dicke von ca. 0.5 mm, so dass der Verbund eine Gesamtdicke von ca. 13 mm aufweist.

Nach dem Walzen weist der metallfaserverstärkte Verbundwerkstoff eine Dicke von ungefähr 6.5 mm auf. Die Verstärkungsschichten können dabei an beliebiger Stelle innerhalb der Schichtstruktur angeordnet sein. Fig. 6 zeigt ein Bauteil aus dem erfindungsgemäßen Verbundwerkstoff mit stufenförmiger Oberfläche, wobei die dünne Seitenfläche "a" eine Höhe von ca. 1,5 mm und die dicke Seitenfläche "b" eine Höhe von ca. 5 mm aufweist. Die Verstärkungsschicht "X" ist dabei zu Unterst angeordnet, um die stufenförmig Bearbeitung des Verbundes nicht zu stören. Somit ist die Ausbildung von beliebigen, maßgeschneiderten Verbundwerkstoffen möglich.

Mit Hilfe des erfindungsgemäßen Verbundwerkstoffes können z.B. die wichtigen Rissfestigkeitseigenschaften von Beplankungsblechen und Stringem, die in Flugzeuglängsachse in den Druckrumpf eingebaut werden, erheblich gesteigert werden. Daneben ist ein Einsatz für andere verkehrstechnische Anwendungen möglich, insbesondere dort wo eine hohe Festigkeit, eine hohe Rißzähigkeit und ein gutes Impact-verhalten erforderlich ist. Ferner findet der metallfaserverstärkte Verbundwerkstoff auch Anwendung in der Wehrtechnik oder ist zur Herstellung von Transportbehältern jeglicher Art geeignet.

## Patentansprüche

1. Metallfaserverstärkter Verbundwerkstoff bestehend aus miteinander verbundenen, alternierend angeordneten Metallschichten (4) und Verstärkungsschichten (5), **dadurch gekennzeichnet, dass** die Verstärkungsschichten (5) Fasern (7) aus hochfestem, metallischem Material enthalten, die in Form eines dreidimensionalen losen Gewirks (6) mit beliebiger Faserorientierung zwischen den Metallschichten (4) angeordnet sind, um einen Materialüberschuss an Fasern (7) in den Verstärkungsschichten (5) zu schaffen, so dass die Fasern (7) in dem durch einen thermo-mechanischen Prozess verschweißten Verbundwerkstoff aufgrund des Materialüberschusses im losen Gewirk (6) gelängt sind.

2. Metallfaserverstärkter Verbundwerkstoff nach Anspruch 1, **dadurch gekennzeichnet, dass** die Metallschichten (4) aus einer Leichtmetalllegierung bestehen.

3. Metallfaserverstärkter Verbundwerkstoff nach Anspruch 1, **dadurch gekennzeichnet, dass** die Fasern (7) aus einem austenitischen oder ausscheidungshärtenden Edelstahl oder aus einer Nickelbasislegierung bestehen.

4. Metallfaserverstärkter Verbundwerkstoff nach Anspruch 1, **dadurch gekennzeichnet, dass** die Fasern (7) aus einer Metalllegierung bestehen, wobei die Metalllegierung eine höhere Festigkeit als die Metallschichten (4) aufweist.

5. Metallfaserverstärkter Verbundwerkstoff nach Anspruch 1, **dadurch gekennzeichnet, dass** die Fasern (7) Ti-, TiAl-, FeAl-, NiAl oder Co-Drähte sind.

6. Metallfaserverstärkter Verbundwerkstoff nach Anspruch 1, **dadurch gekennzeichnet, dass** das lose Gewirk (6) eine aus den Fasern (7) geflochtene, gewobene oder gestrickte Struktur ist.

7. Metallfaserverstärkter Verbundwerkstoff nach Anspruch 1, **dadurch gekennzeichnet, dass** das lose Gewirk (6) eine aus den Fasern (7) hergestellte netzartige, verworrene oder versponnene Struktur ist.

8. Verfahren zur Herstellung eines metallfaserverstärkten Verbundwerkstoffes, **gekennzeichnet durch**
- alternierendes Anordnen von Metallschichten (4) und Verstärkungsschichten (5) zu einer Schichtstruktur (3), wobei die Verstärkungsschichten (5) Fasern (7) aus hochfestem, metallischem Material enthalten, die in Form eines dreidimensionalen losen Gewirks (6) mit beliebiger Faserorientierung zwischen die Metallschichten (4) eingelegt werden, um einen Materialüberschuss an Fasern (7) in den Verstärkungsschichten (5) zu schaffen; und
- Verbinden der Schichtstruktur (3) **durch** einen thermo-mechanischen Prozess, wobei sich die Fasern (7) aufgrund des Materialüberschusses im losen Gewirk (6) längen und die Schichtstruktur (3) verschweißt wird.

9. Verfahren zur Herstellung eines metallfaserverstärkten Verbundwerkstoffes nach Anspruch 8, **dadurch gekennzeichnet, dass** der thermomechanische Prozess ein Warm- oder Kaltwalzen ist.

10. Verfahren zur Herstellung eines metallfaserverstärkten Verbundwerkstoffes nach Anspruch 8, **dadurch gekennzeichnet, dass** die Metallschichten (4) mit einer Lotlegierung (9) versehen werden, wobei die Lotlegierung (9) eine walzplattierbare Legierung.

11. Verfahren zur Herstellung eines metallfaserverstärkten Verbundwerkstoffes nach Anspruch 10, **dadurch gekennzeichnet, dass** die Metallschichten (4) walzplattiert werden.

12. Verfahren zur Herstellung eines metallfaserverstärkten Verbundwerkstoffes nach Anspruch 10 oder 11, **dadurch gekennzeichnet, dass** die Schichtstruktur (3) vor oder während des thermo-mechanischen Prozesses auf eine Temperatur unterhalb von 600°C aufgeheizt wird, so dass die Lotlegierung (9) schmilzt und zu einem Verbacken der Schichtstruktur (3) führt.

13. Verfahren zur Herstellung eines metallfaserverstärkten Verbundwerkstoffes nach einem der Ansprüche 8 bis 12, **dadurch gekennzeichnet, dass** die Fasern (7) mit Zink, Nickel, Kupfer oder einer anderen benetzungsfördernden Oberflächenschicht oberflächenbehandelt werden.

14. Halbzeug aus einem metallfaserverstärkten Verbundwerkstoff gemäß einem der Ansprüche 1 bis 7.

15. Verwendung des metallfaserverstärkten Verbundwerkstoffes nach einem der Ansprüche 1 bis 7 für Rumpfbeplankungen in Versteifungsrippen und Hautfelder von Flugzeugen, sowie für Wehrtechnikanwendungen,Transportbehälter oder andere verkehrstechnische Anwendungen.

## Claims

1. Metal fibre-reinforced composite material consisting of metal layers (4) and reinforcing layers (5) which are bonded together and arranged in an alternating fashion, **characterised in that** the reinforcing layers (5) contain fibres (7) of high-strength, metallic material which are arranged in the form of a three-dimensional open-texture fabric (6) with random fibre orientation between the metal layers (4) in order to create a material surplus of fibres (7) in the reinforcing layers (5), so that the fibres (7) are lengthened in the composite material, which is welded by a thermomechanical process, on the basis of the material surplus in the open-texture fabric (6).

2. Metal fibre-reinforced composite material according to Claim 1, **characterised in that** the metal layers (4) consist of a light metal alloy.

3. Metal fibre-reinforced composite material according to Claim 1, **characterised in that** the fibres (7) consist of an austenitic or a precipitation-hardening special steel or of a nickel-base alloy.

4. Metal fibre-reinforced composite material according to Claim 1, **characterised in that** the fibres (7) consist of a metal alloy, wherein the metal alloy is of a higher strength than the metal layers (4).

5. Metal fibre-reinforced composite material according to Claim 1, **characterised in that** the fibres (7) are Ti, TiAl, FeAl, NiAl or Co wires.

6. Metal fibre-reinforced composite material according to Claim 1, **characterised in that** the open-texture fabric (6) is a structure which is braided, woven or knitted from the fibres (7).

7. Metal fibre-reinforced composite material according to Claim 1, **characterised in that** the open-texture fabric (6) , is a net-like, entangled or spun structure which is produced from the fibres (7).

8. Method for producing a metal fibre-reinforced composite material, **characterised by**
- alternately arranging metal layers (4) and reinforcing layers (5) to form a layer structure (3), wherein the reinforcing layers (5) contain fibres (7) of high-strength, metallic material which are introduced in the form of a three-dimensional open-texture fabric (6) with random fibre orientation between the metal layers (4) in order to create a material surplus of fibres (7) in the reinforcing layers (5); and
- bonding the layer structure (3) by a thermomechanical process, wherein the fibres (7) lengthen on the basis of the material surplus in the open-texture fabric (6) and the layer structure (3) is welded.

9. Method for producing a metal fibre-reinforced composite material according to Claim 8, **characterised in that** the thermomechanical process is a hot or cold rolling process.

10. Method for producing a metal fibre-reinforced composite material according to Claim 8, **characterised in that** the metal layers (4) are provided with a soldering alloy (9), wherein the soldering alloy (9) is an alloy which can be roll-bonded.

11. Method for producing a metal fibre-reinforced composite material according to Claim 10, **characterised in that** the metal layers (4) are roll-bonded.

12. Method for producing a metal fibre-reinforced composite material according to Claim 10 or 11, **characterised in that** the layer structure (3) is heated before or during the thermomechanical process to a temperature below 600°C, so that the soldering alloy (9) melts and causes the layer structure (3) to bind.

13. Method for producing a metal fibre-reinforced composite material according to any one of Claims 8 to 12, **characterised in that** the fibres (7) are surface-treated with zinc, nickel, copper or another surface layer which promotes wetting.

14. Semi-finished product of a metal fibre-reinforced composite material according to any one of Claims 1 to 7.

15. Use of the metal fibre-reinforced composite material according to any one of Claims 1 to 7 for fuselage claddings in reinforcing ribs and skin areas of aircraft, as well as for military engineering applications, transport containers or other traffic engineering applications.

## Revendications

1. Matériau composite renforcé par des fibres métalliques constitué de couches métalliques (4) liées l'une à l'autre et disposées en alternance et de couches de renforcement (5),
**caractérisé en ce que**
les couches de renforcement (5) contiennent des fibres (7) en matériau hautement résistant métallique qui sont disposées sous la forme d'un entrelacement élémentaire tridimensionnel (6) présentant une orientation de fibres quelconque entre les couches métalliques (4), pour créer un excès en matériau de fibres (7) dans les couches de renforcement (5), de telle sorte que les fibres (7) sont allongées, en raison de l'excès en matériau dans l'entrelacement élémentaire (6), dans le matériau composite soudé par un processus thermo-mécanique.

2. Matériau composite renforcé par des fibres métalliques selon la revendication 1,
**caractérisé en ce que**
les couches métalliques (4) sont constituées d'un alliage de métaux légers.

3. Matériau composite renforcé par des fibres métalliques selon la revendication 1,
**caractérisé en ce que**
les fibres 7) sont constituées d'un acier noble austénitique ou durcissant par précipitation ou d'un alliage à base de nickel.

4. Matériau composite renforcé par des fibres métalliques selon la revendication 1,
**caractérisé en ce que**
les fibres (7) sont constituées d'un alliage de métaux, l'alliage de métaux présentant une résistance plus élevée que les couches métalliques (4).

5. Matériau composite renforcé par des fibres métalliques selon la revendication 1,
**caractérisé en ce que**
les fibres (7) sont des fils de Ti-, TiAl-, FeAl-, NiAl ou Co.

6. Matériau composite renforcé par des fibres métalliques selon la revendication 1,
**caractérisé en ce que**
l'entrelacement élémentaire (6) est une structure tressée, tissée ou tricotée en fibres (7).

7. Matériau composite renforcé par des fibres métalliques selon la revendication 1,
**caractérisé en ce que**
l'entrelacement élémentaire (6) est une structure réticulaire, confuse ou tricotée fabriquée à partir des fibres (7).

8. Procédé de fabrication d'un matériau composite renforcé par des fibres,
**caractérisé par**
- une disposition en alternance de couches métalliques (4) et de couches de renforcement (5) en une structure en couches (3), les couches de renforcement (5) contenant des fibres (7) en matériau hautement résistant et métallique qui sont déposées entre les couches métalliques (4) sous la forme d'un entrelacement élémentaire tridimensionnel (6) présentant une orientation de fibres quelconque, pour créer un excès en fibres (7) dans les couches de renforcement (5), et
- une liaison de la structure en couches (3) par un processus thermo-mécanique, les fibres (7) s'allongeant en raison de l'excès en matériau dans l'entrelacement élémentaire (6) et la structure en couches (3) étant soudée.

9. Procédé de fabrication d'un matériau composite renforcé par des fibres métalliques selon la revendication 8,
**caractérisé en ce que**
le processus thermo-mécanique est un rouleau chaud ou froid.

10. Procédé de fabrication d'un matériau composite renforcé par des fibres métalliques selon la revendication 8,
**caractérisé en ce que**
les couches métalliques (4) sont pourvues d'un alliage de lots (9), l'alliage de lots (9) étant un alliage pouvant être aplati par rouleau.

11. Procédé de fabrication d'un matériau composite renforcé par des fibres métalliques selon la revendication 10,
**caractérisé en ce que**
les couches métalliques (4) sont aplaties par rouleau.

12. Procédé de fabrication d'un matériau composite renforcé par des fibres métalliques selon la revendication 10 ou 11,
**caractérisé en ce que**
la structure en couches (3) est chauffée avant ou pendant le processus thermo-mécanique à une température inférieure à 600°C, de telle sorte que l'alliage de lots (9) entre en fusion et amène la cuisson de la structure en couches (3).

13. Procédé de fabrication d'un matériau composite renforcé par des fibres métalliques selon l'une quelconque des revendications 8 à 12,
**caractérisé en ce que**
les fibres (7) sont traitées en surface avec du zinc, du nickel, du cuivre ou avec une autre couche de surface favorisant le mouillage.

14. Produit semi-ouvré constitué d'un matériau composite renforcé par des fibres métalliques selon l'une quelconque des revendications 1 à 7.

15. Utilisation du matériau composite renforcé par des fibres métalliques selon l'une quelconque des revendications 1 à 7, pour des recouvrements de fuselage dans des nervures de renfort et des revêtements pour avions, ainsi que pour des applications de techniques de défense, des conteneurs ou d'autres applications de la technique de la circulation.
